# EUROPEAN PATENT SPECIFICATION

(11) **EP 1 148 104 B1**
(45) Date of publication and mention of the grant of the patent: **07.02.2007**
(21) Application number: 01303593.6
(22) Date of filing: 19.04.2001
(51) Int. Cl.: C09D 11/00

(54) **Generation of film on paper for the promotion of waterfastness and smearfastnes**
Herstellung eines Film auf Papier zur Erhöhung der Wasserbeständigkeit und Schmerfestigkeit
Formation d'un film sur du papier pour améliorer la résistance à l'eau et à la salissure

(30) Priority: 20.04.2000 US 556028
(43) Date of publication of application: 24.10.2001
(73) Proprietor: Hewlett-Packard Company, Palo Alto, CA 94304-1112 (US)
(72) Inventor: Schut, David M., Philomath, OR 97370 (US)
(74) Representative: Carpmaels & Ransford

(56) References cited:
- EP-A- 0 663 299
- US-A- 5 476 540
- US-A- 5 792 249

## Description

The present invention generally relates to an additive useful in inkjet printing systems comprising a 5^{th} or 6^{th} ink pen set. The fluids of this invention interact beneficially with either the media, the ink and/or a reactive fluid contained in an additional pen. The additives mentioned are used to form a protective gel-like film on the medium substrate and provides both print and permanence benefits, such as increased chroma, smearfastness, smudgefastness and waterfastness.

The use of ink-jet printing systems has grown dramatically in recent years. This growth may be attributed to substantial improvements in print resolution and overall print quality, coupled with appreciable reduction in cost. Today's ink-jet printers offer acceptable print quality for many industrial, commercial, business and residential applications at costs fully an order of magnitude lower than comparable products available just a few years ago. Notwithstanding their recent success, intensive research and development efforts continue toward improving the permanence issues of ink-jet images.

Ink-jet printing involves ejection of droplets of ink on a media to produce images. Typically these images are not resistant to image degrading factors, such as mechanical abrasion, light, water and/or solvents, such as those used in highlighter pens. Advancing ink-jet printing technology and consumer demand requires that printing systems address these issues as well as becoming faster, with quicker drying times and with higher chromatic efficiencies.

A variety of approaches have been used to address some of these permanence issues. For example, a 'fifth' pen or 'plain paper optimization' strategy has been used in ink-jet products with some success. Other approaches include polymers formulated into inks followed by post treatment with heat or fusion, deposition of toner by electrography, and special additives such as lamellae or vesicle forming surfactants. Despite these advancements, a need remains for improved ink-jet products to meet permanence and chroma goals and deliver consumer satisfaction.

U.S. Patent No. 5,476,540 discloses a method for controlling color bleed between adjacent multi-color ink regions on a print medium by applying a first composition containing a gel-forming species and bringing a color agent into contact on a region of the print medium with a second composition having a color agent and a gel-initiating species or chemical conditions which bring about gelation.

EP-A-0663299 discloses a colorless or pale-colored liquid composition comprising a cationic substance, wherein the liquid composition contains in combination a cationic substance and a nonionic polymeric substance.

### BRIEF DESCRIPTION OF THE INVENTION

The present invention provides an inkset and method of inkjet printing as set out in claims 1 and 7 respectively.

It has been found that inclusion of polyvinyl alcohol and polyethyleneimine in a fixer fluid produces increased durability and better chroma of the printed material. Furthermore, coupling this polyvinyl alcohol containing fixer fluid with an aqueous based, borate-containing ink or second fixer fluid increases the desired effects even further. Without being limited by theory, it is believed that the polyvinyl alcohol forms a protective layer over the printed material to provide protection from physical abrasion such as smear and smudge. This protective layer may have increased protection benefits through interaction of the polyvinyl alcohol with the media through hydrogen bonding interactions. Reaction of the polyvinyl alcohol with a crosslinking reagent (borate), contained either in the ink vehicle or in a 6^{th} pen, forms a gelatinous film in which the water and colorant are trapped and protected. Furthermore, this dye/film complex can be stabilized even more through the interaction of the polyvinyl alcohol residues with the media through hydrogen bonding interactions. Finally, it should be mentioned that medium printed with the above ink(s) and fixer(s) combinations can be further treated by heat and/or fusion (a combination of heat and pressure).

### DESCRIPTION OF THE DRAWINGS

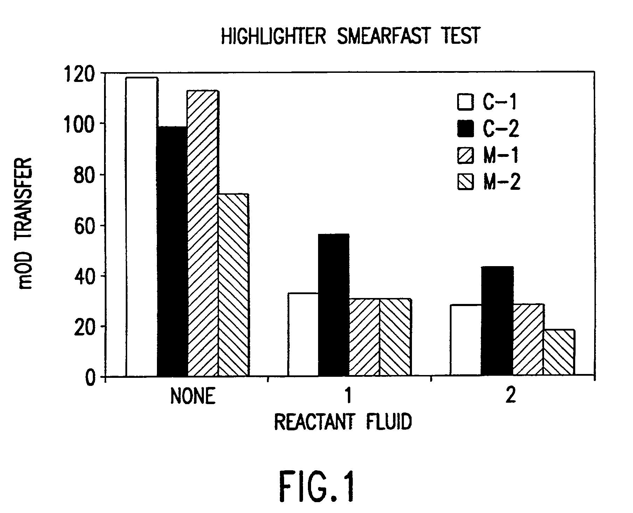

Figure 1 depicts a graph of results of a highlighter smear test in the examples.

### Definitions

Fluid - includes either or both the reactant fluid(s) and ink composition(s).

Reaction - means that the solubility or phase state of one or more components is changed as to immobilize the movement of at least one colorant on the printed media.

Reactant Fluid - also known as the 5^{th} and/or 6^{th} pen fluid or fixer fluid. This is a fluid that is typically devoid of color (i.e., the reactant fluid may contain no colorant (e.g., dye and/or pigment), or it may contain a colorant that does not absorb visible light but may absorb in either the UV and/or IR spectrums). Components in the reactant fluid are included to provide the permanence and/or print benefits that are desired for ink-jet prints. For instance, polyethyleneimine, under acidic conditions, provides waterfastness for many types of anionic dyes and/or pigments. In this patent, the reactant fluid contains either the polyvinyl alcohol or the borate to provide film coverage of the printed material to produce higher quality prints with increased durability.

Ink - a fluid containing at least one colorant with coverage in the visible spectrum. Ink-jet printers typically contain an ink set with black, magenta, cyan and yellow inks, commonly known as a 4-pen ink set. Additional pens with additional color inks may also be present (for instance, a light cyan and light magenta for photographic quality work, or a green and orange ink set for graphic arts work). Also, additional pens with other fixer fluids may be present to enhance either the durability aspects or the print quality attributes of this invention.

The present invention is directed to fluid sets, in particular for use in coloring applications, and more particularly for use in ink-jet printing. The present fluid set combines the benefits of interactive fluids while utilizing pigments and/or dyes providing enhanced image integrity to the ink-jet formulation. The fluid set may be used in many applications of aqueous-based printing inks, in particular ink-jet inks for use in commercially available ink-jet printers such as DESKJET^{®} printers, manufactured by Hewlett-Packard Company, of Delaware; and other commercially available home or office ink-jet printers.

Aqueous inks of this invention comprise, by weight, from 0.5 to 20 wt % colorant, preferably from 1 to 10 %, and more preferably from 1 to 6 wt % colorant; from 0.1 to 40 wt % of one or more organic solvents and/or additives (including polyvinyl alcohol); and optionally up to 20 wt % of a borate additive (when using polyvinyl alcohol in the 5^{th} and/or 6^{th} pen). Additional ingredients are independently selected from the group consisting of surfactants, buffers, biocides and mixtures thereof.

### DETAILED DESCRIPTION OF THE INVENTION

### COLORANTS

Colorants for use herein are anionic dyes and/or pigments. As used herein, the term 'pigment' refers to a colorant that is insoluble in the aqueous vehicle, and includes disperse dyes as well as pigments that are either dispersed with the aid of a dispersant or those that are self-dispersed.

Examples of suitable colorants herein include organic dyes having at least one or preferably two or more carboxyl and/or carboxylate groups, examples of which are listed in U.S. Patent No. 4,963,189 (filed by Hindagolla and assigned to the same assignee as the present invention), organic dyes having at least one or more solubilizing sulphonate groups, organic dyes containing other solubilizing polar groups such as hydroxyls, and thiol derivatives, carboxylated pigment dispersions having a water insoluble colorant (e.g., pigment) dispersed with a dispersant containing carboxylate solubilizing groups (such as disclosed in U.S. Patent No. 5,085,698, and U.S. Patent No. 5,555,008, or self-dispersed pigments provided under the Trade name Cabojet^{™} by Cabot Company). The countercations of these dyes and/or pigments can be sodium, potassium, and ammonium salts.

Dyes suitable for use herein include any of the dyes commonly employed in the ink-jet printing market such as: Food Black 2, Reactive Black 31, Direct Red 227, Reactive Red 147, Reactive Red 180, Reactive Red 23, Acid Red 52, Direct Blue 199, Acid Blue 9, Direct yellow 86, Direct Yellow 132, Acid Yellow 23, Acid Yellow 17, Direct Yellow 100, and Direct Yellow 142. As above, the countercations of these dyes can include sodium, potassium and/or ammonium salts such as ammonium, tetramethyl ammonium or triethanolamine salts.

The polyvinyl alcohol can range in molecular weight (wt avg) from 1,000 to 250,000, preferably from 1,250 to 200,000, more preferably from 1,250 to 135,000. The borate, if used herein, can be any boron-containing compound which suitably works with the fluids herein; examples include sodium borate and boric acid.

### FLUIDS

The fluids of the present invention, both the ink and the fixer fluid, may comprise from 0.1 to 80 wt % of at least one organic solvent. More preferably the fluids comprise from 1 to 50 wt % of at least one organic solvent with from 5 to 30 wt % being the more preferred. Optionaly, one or more water-soluble surfactants/amphiphiles (0 to 40 wt %, preferably 0.1 to 15 wt %) may be present. The inks of this invention have a pH in the range of from 7 to 11, preferably from 8 to 10, more preferably from 8 to 9. The 5^{th} pen fluids of this invention have a pH range that is dependent upon the reactive contents of the pen and may range for those pens containing borate from 7 to 11, preferably from 8 to 10, and more preferably from 8 to 9, or those pens which contain polyethyleneimine having a range of 2.5 to 7, prferably from 3 to 6, and more preferably from 4 to 5.

### AQUEOUS VEHICLE

All concentrations herein are expressed as weight percentages, unless otherwise indicated. The purity of all components is that employed in normal commercial practice for ink-jet inks. All cited documents and patents are hereby incorporated by reference.

Other ingredients added to the inks of this invention should be compatible with the above colorants employed in this invention. Likewise, other ingredients added to the reaction fluids of this invention should be compatible with the above reactive agents employed in this invention.

The aqueous vehicle is water or a mixture of water and at least one water-soluble organic solvent, as is well-known in the art. Selection of a suitable mixture depends on requirements of the specific application, such as the desired surface tension and viscosity, the selected colorant or reactive agent, drying time of the ink-jet fluid, and the type of print medium onto which the fluid will be printed. For a discussion of inks and their properties, see *The Printing Manual,* 5^{th} Ed., Leach et al. (Chapman and Hall, 1993). See also U.S. Patent Nos. 2,833,736; 3,607,813; 4,104,061; 4,770,706; and 5,026,755.

The water soluble organic solvents suitably employed in the present ink-jet ink compositions include any of, or a mixture of two or more, of such compounds as nitrogen-containing ketones, such as 2-pyrrolidinone, N-methyl-2-pyrrolidinone (NMP), 1,3-dimethylimidazolid-2-one, and octyl-pyrrolidinone; diols such as ethanediols (e.g., 1,2-ethanediol), propanediols (e.g., 1,2-propanediol, 1,3-propanediol), butanediols (e.g., 1,2-butanediol, 1,3-butanediol, 1,4-butanediol, 2,3-butanediol), pentanediols (e.g., 1,2-pentanediol, 1,5-pentanediol), hexanediols (e.g., 1,2-hexanediol, 1,6-hexanediol, 2,5-hexanediol), heptanediols (e.g., 1,2-heptanediol, 1,7-heptanediol), octanediols (e.g., 1,2-octanediol, 1,8-octanediol); triols such as 2-ethyl-2-hydroxymethyl-1,3-propanediol and ethylhydroxypropanediol (EHPD); and glycol ethers and thioglycol ethers, commonly employed in ink-jet inks such as polyalkylene glycols such as polyethylene glycol (e.g., diethylene glycol (DEG), triethylene glycol, tetraethylene glycol), polypropylene glycols (e.g., dipropylene glycol, tripropylene glycol, tetrapropylene glycol), and larger polymeric glycols (e.g., PEG 200, PEG 300, PEG 400, PPG 400) and thioglycol. Preferably 2-pyrrolidinone, NMP, DEG, EHPD and 1,5-pentanediol are employed in the practice of this invention with 2-pyrrolidinone, DEG and 1,5-pentanediol being the most preferred solvents.

Suitable surfactants may be nonionic or anionic when used in the fluid vehicle. Examples of suitable nonionic surfactants include: secondary alcohol ethoxylates (e.g., Tergitol series available from Union Carbide Co.), nonionic fluoro surfactants (such as FC-170C available from 3M), nonionic fatty acid ethoxylate surfactants (e.g., Alkamul PSMO-20 available from Rhone-Poulenc), and acetylenic polyethylene oxide surfactants (e.g., Surfynol series, available form Air Products & Chemicals, Inc.). Examples of anionic surfactants include alkyldiphenyloxide surfactants (such as Calfax available from Pilot), and Dowfax (e.g., Dowfax 8390 available from Dow), and fluorinated surfactants (Fluorad series available from 3M). Cationic surfactants may be used in the reactive fluid which interacts with the ink vehicle and/or ink vehicle colorant. Cationic surfactants that may be used include betaines (e.g., Hartofol CB-45 available from Hart Product Corp., Mackam OCT-50 available from McIntyre Group Ltd., Amisoft series available from Ajinomoto), quaternary ammonium compounds (e.g., glucquat series available from Amerchol, Bardac and Barquat series available from Lonza), cationic amine oxides (e.g., Rhodamox series available from Rhone-Poulenc, Barlox series available from Lonza) and imidazoline surfactants (e.g., Miramine series available from Rhone-Poulenc, Unamine series available from Lonza).

Buffers may be used to modulate pH and they can be organic based biological buffers or inorganic buffers such as sodium phosphate. Furthermore, the buffer employed should provide a pH ranging from 4 to 9 in the practice of the invention. Examples of preferably employed organic buffers include Trizma base, available from companies such as Aldrich Chemical (Milwaukee, WI), 4-morpholinoethanesulfonic acid (MES) and 4-morpholinopropanesulfonic acid (MOPS). The buffering agent concentration should not exceed about 0.5 wt % of the total ink composition due to crusting considerations. The buffering agent is typically used in the range of 0.05 to 0.1 wt % of the total ink concentration, in order to reduce the possibility of crusting.

Any of the biocides commonly employed in ink-jet inks may be employed in the practice of the invention, such as NUOSEPT 95, available from Hals America (Piscataway, NJ); Proxel GXL, available from Avecia (Wilmington, DE); and glutaraldehyde, available from Union Carbide Company (Bound Brook, NJ) under the trade designation UCARCIDEW 250. Proxel GXL is the preferred biocide. The biocide typically ranges from 0.01 to 0.3 wt % of the total ink composition.

The balance of the ink compositions of the invention comprises water, specifically, deionized water.

Ink compositions within the foregoing listed ranges will print on a large variety of plain papers, such as xerography or photocopy paper, bond paper, and laser jet paper. The print quality achieved is high, and provides letter quality printing using a thermal ink-jet pen.

This invention also encompasses a method for ink-jet printing with the colorants and 5^{th} and/or 6^{th} pen fluids discussed above.

The reactant fluids of this invention are preferably applied either as an underprinting fluid, or an overprinting fluid, or as both in the printing process using methods known in the art for 5^{th} and 6^{th} pen applications.

The substrate after printing can be heated or fused by any means known in the art to increase the benefits of the crosslinksing reaction. Typical methods include thermal means such as a heated drum or fuser (heating to a temperature of from 40C to 400C, preferably from 100C to 250C); photolytic means such as a light bar (exposure to light from 200 nm to 500 nm wavelengths, at a power of 20-100 mJ/cm²), or a laser (at wavelengths between 200-600 nm, preferably from 250-500 nm); or chemical treatment such as with suitable organic or inorganic acid or base.

There are three typical scenarios which may be described using the 5^{th} and 6^{th} pen technologies in which the reactant fluid is used. These scenarios are listed as follows:

### Scenario #1:

The 5^{th} pen contains the reactant fluid which is then applied prior to laying down the ink vehicle on the media. The components in the 5^{th} pen either react with the media (chemically or through the formation of hydrogen bonding interactions - much as that obtained with polyvinyl alcohol interacting with the cellulose fibers of the paper) or interact with the components in the ink vehicle to obtain the desired properties. An example of a simple fluid set for this scenario is given in the following table. UP-1, UP-2 and UP-3 are the 5^{th} pen reactant fluids which are used to underprint the ink vehicle (which are labeled as IV-1, IV-2 and IV-3).

**Table 1: Scenario #1 Ink-Jet Fluid Set (in wt %)**

| **Component** | **UP-1** | **UP-2** | **UP-3** | **IV-1** | **IV-2** | **IV-3** | **Purpose** |
|---|---|---|---|---|---|---|---|
| 1,5-pentanediol | 5.0 | 5.0 | 10.0 | 10.0 | 10.0 | 5.0 | Humectant |
| 2-pyrrolidinone | 10.0 | 10.0 | 10.0 | 10.0 | 10.0 | 10.0 | Anti-cockle |
| Dowfax 8390 | -- | -- | -- | 1.0 | 1.0 | 1.0 | Anionic surfactant |
| Dye load | -- | -- | -- | 3-4 | 3-4 | 3-4 | Colorant |
| Na₂B₂O₇^{§} | -- | -- | 5.0 | -- | 5.0 | -- | Crosslinker |
| PEI (MW = 2,000)** | -- | 2.5 | -- | -- | -- | -- | Waterfastness |
| pH^{¥} | 7.0 | 4.0 | 8.0 | 8.0 | 8.0 | 8.0 | Solubilization |
| Proxel GXL | 0.2 | 0.2 | 0.2 | 0.2 | 0.2 | 0.2 | Biocide |
| PVA (MW=3,000)* | 3.0 | 3.0 | -- | -- | -- | 3.0 | Film forming reagent |
| Tergitol 15-S-5 | -- | -- | -- | 1.5 | 1.5 | 1.5 | Nonionic surfactant |
| Tergitol 15-S-7 | 2.0 | 2.0 | 2.0 | -- | -- | -- | Nonionic surfactant |

| | | | | | | | |
|---|---|---|---|---|---|---|---|
| *PVA = polyvinyl alcohol, 78% hydrolyzed - obtained from Polysciences, Inc. **PE = polyethyleneimine, obtained from Aldrich Chemical Co. ^{¥}pH adjustments made with NaOH and/or HNO₃. ^{§}sodium borate, can also use boric acid that has been pH adjusted. | | | | | | | |

In this scenario, one of several interactions may occur - dependent upon the underprinting fluid (UP-X) and ink vehicle (IV-X) combination used.
#1) UP-1 / IV-1: The PVA material is used to underprinting the ink vehicle, and the resultant thin film protects the printed material from physical abrasion either by interacting with the media (through hydrogen bonding effects) or through the formation of a thin film.
#2) UP-1 / IV-2: The PVA material is placed on the medium prior to printing with the ink vehicle. Once the ink vehicle is laid upon the media, the sodium borate interacts with the PVA to crosslink the polymer to form a gelatinous material which absorbs water, forms a protective layer, as well as promote the possibility of creating a hydrogen bonding interaction between the PVA and the cellulose medium.
#3) UP-2 / IV-1: The PEI material is used to underprinting the ink vehicle and is used to promote complete waterfastness of the printed material. The PVA is then used to create the thin film layer which would protect the resultant print from the physical abrasion tests of smear and smudge.
#4) UP-2 / IV-2: The interactions would be much the same as #3, but with the addition of the sodium borate to the ink vehicle, the resultant print should have crosslinked PVA polymer which will give increased resistance to physical abrasion effects.
#5) UP-3 / IV-3: In this case, the borate is laid down prior to laying down the ink vehicle, which contains the polyvinyl alcohol. Otherwise the interaction should be much the same as that exhibited in #2.

### Scenario #2:

The 5^{th} pen contains the reactant fluid which is applied after laying down the ink vehicle. The components in the 5^{th} pen then interact with the components in the ink vehicle or with the media (to create hydrogen bonding interactions between the polyvinyl alcohol and the cellulose fibers of the paper). An example of the fluid set for this scenario is given in Table 2 where the ink vehicles are labeled IV-1, IV-2 and IV-3 and the overprinting vehicles, containing the reactant fluid, are labeled as OP-1, OP-2 and OP-3.

**Table 2: Scenario #2 Ink-Jet Fluid Set (in wt %).**

| **Component** | **IV-1** | **IV-2** | **IV-3** | **OP-1** | **OP-2** | **OP-3** | **Purpose** |
|---|---|---|---|---|---|---|---|
| 1,5-pentanediol | 10.0 | 10.0 | 5.0 | 5.0 | 5.0 | 10.0 | Humectant |
| 2-pyrrolidinone | 10.0 | 10.0 | 10.0 | 10.0 | 10.0 | 10.0 | Anti-cockle |
| Dowfax 8390 | 1.0 | 1.0 | 1.0 | - | - | - | Anionic surfactant |
| Dye load | 3-4 | 3-4 | 3-4 | - | - | -- | Colorant |
| Na₂B₂O₇ | - | 5.0 | - | - | - | 5.0 | Crosslinker |
| PEI (MW = 2,000) | - | - | - | - | 2.5 | -- | Waterfastness |
| pH | 8.0 | 8.0 | 8.0 | 7.0 | 4.0 | 8.0 | Solubilization |
| Proxel GXL | 0.2 | 0.2 | 0.2 | 0.2 | 0.2 | 0.2 | Biocide |
| PVA (MW=3,000) | -- | -- | 3.0 | 3.0 | 3.0 | -- | Film forming reagent |
| Tergitol 15-S-5 | -- | -- | -- | 1.5 | 1.5 | 1.5 | Nonionic surfactant |
| Tergitol 15-S-7 | 2.0 | 2.0 | 2.0 | -- | -- | -- | Nonionic surfactant |

In this scenario, one of several interactions may occur - dependent upon the underprinting fluid (UP-X) and ink vehicle (IV-X) combination used.
#1) IV-1 / OP-1: The PVA contained in the overprinting vehicle forms a protective layer over the printed area - promoting protection against physical abrasion such as that done by smear and smudge tests. Furthermore, the PVA can also form hydrogen bonds with the cellulose fibers, increasing the durability of the print due to that interaction.
#2) IV-1 / OP-2: Again, the PVA contained in the overprinting vehicle forms a protective layer over the printed area - promoting protection against physical abrasion. Furthermore, addition of the acidified PEI enhances the waterfastness of the resultant print.
#3) IV-2 / OP-1: Similar to interaction #1 except that the ink vehicle contains sodium borate which will induce crosslinking of the PVA to create a gelatinous material and increase the durability of the resultant print.
#4) IV-2 / OP-2: Similar to interaction #2 except that the ink vehicle contains sodium borate which will induce crosslinking of the PVA to create a gelatinous material and increase the durability of the resultant print.
#5) IV-3 / OP-3: This interaction is similar to that of #3 with the exception that the PVA is contained in the ink vehicle and the sodium borate is contained in the overprinting vehicle. This is the same exact mechanism as described in Scenario #1 - Interaction #5 with the exception that the PVA containing vehicle also has colorant in this example.

### Scenario #3:

In this scenario, both the 5^{th} and the 6^{th} pen contain the reactant fluids necessary to achieve the desired durability goals. Compositions and their interactions are detailed below in Table 3. As before, ink vehicles are labeled with IV-X, underprinting vehicles as UP-X and overprinting vehicles as OP-X.

**Table 3: Scenario #3 Ink-Jet Fluid Sets (in wt %).**

| **Component** | **UP-1** | **UP-2** | **UP-3** | **UP-4** | **IV-1** | **IV-2** | **IV-3** | **OP-1** | **OP-2** | **OP-3** | **OP-4** |
|---|---|---|---|---|---|---|---|---|---|---|---|
| 1,5-pentane diol | 5.0 | 5.0 | 10.0 | 10.0 | 10.0 | 5.0 | 10.0 | 5.0 | 10.0 | 5.0 | 10.0 |
| 2-pyrrolid inone | 10.0 | 10.0 | 10.0 | 10.0 | 10.0 | 10.0 | 10.0 | 10.0 | 10.0 | 10.0 | 10.0 |
| Tergitol 15-S-5 | -- | -- | -- | -- | 1.5 | 1.5 | 1.5 | 2.0 | 1.0 | 1.0 | 2.0 |
| Proxel GXL | 0.2 | 0.2 | 0.2 | 0.2 | 0.2 | 0.2 | 0.2 | 0.2 | 0.2 | 0.2 | 0.2 |
| Tergitol 15-S-7 | 2.0 | 2.0 | 2.0 | 2.0 | -- | -- | -- | -- | -- | -- | -- |
| PVA | 3.0 | 3.0 | -- | -- | -- | 3.0 | -- | 3.0 | -- | 3.0 | -- |
| PEI | -- | 2.5 | -- | 2.5 | -- | -- | -- | 2.5 | -- | -- | 2.5 |
| pH | 7.0 | 4.0 | 8.0 | 4.0 | 8.0 | 8.0 | 8.0 | 4.0 | 8.0 | 7.0 | 4.0 |
| Na₂B₂O 7 | -- | -- | 5.0 | -- | -- | -- | 5.0 | -- | 5.0 | -- | -- |
| Dye Load | -- | -- | -- | -- | 3-4 | 3-4 | 3-4 | -- | -- | -- | -- |
| Dowfax 8390 | -- | -- | -- | -- | 1.0 | 1.0 | 1.0 | -- | 2.0 | 2.0 | -- |

In this scenario, one of several interactions may occur - dependent upon the underprinting fluid (UP-X) and ink vehicle (IV-X) combination used.
#1) UP-1 / IV-3 / OP-4: The PVA in the underprinting vehicle interacts with the sodium borate in the ink vehicle resulting in crosslinking the PVA creating a physical abrasion resistant covering. The colorant then interacts with the PEI in the overprint vehicle to create a waterfast colorant/fixer complex.
#2) UP-1 / IV-1 / OP-2: The PVA in the underprinting vehicle interacts with the sodium borate in the overprinting vehicle, resulting in the crosslinking of the PVA to create a physical abrasion resistant covering.
#3) UP-2 / IV-1 / OP-2: The PEI in the underprinting fluid interacts with the colorant in the ink vehicle to create a waterfast colorant/fixer complex. The PVA in the underprinting fluid then interacts with the sodium borate in the overprinting fluid to create a crosslinked polymeric network which promotes resistance against physical abrasion.
#4) UP-4 / IV-2 / OP-2: The PEI in the underprinting fluid interacts with the colorant in the ink vehicle to create a waterfast colorant/fixer complex. The PVA in the ink vehicle then interacts with the sodium borate in the overprinting fluid to create a crosslinked polymeric network which promotes resistance against physical abrasion.
#5) UP-4 / IV-3 / OP-3: The PEI in the underprinting fluid interacts with the colorant in the ink vehicle to create a waterfast colorant/fixer complex. The borate in the ink vehicle then interacts with the PVA in the overprinting fluid to create a crosslinked polymeric network which promotes resistance against physical abrasion.
#6) UP-4 / IV-1 / OP-3: The PEI in the underprinting fluid interacts with the colorant in the ink vehicle to create a waterfast colorant/fixer complex. The PVA in the overprinting fluid then creates a polymeric film to protect the resultant print against physical abrasion effects.
#7) UP-3 / IV-1 / OP-3: The borate in the underprinting fluid interacts with the PVA in the overprinting fluid to create a crosslinked polymeric network which promotes resistance against physical abrasion.
#8)UP-3 / IV-1 / OP-1: The borate in the underprinting fluid interacts with the PVA in the overprinting fluid to create a crosslinked polymeric network which promotes resistance against physical abrasion. Furthermore, the PEI in the overprinting fluid interacts with the colorant to create a waterfast colorant/fixer complex.
#9) UP-3 / IV-2 / OP-4: The borate in the underprinting fluid interacts with the PVA in the ink vehicle to create a crosslinked polymeric network which promotes resistance against physical abrasion. Furthermore, the PEI in the overprinting fluid interacts with the colorant to create a waterfast colorant/fixer complex.

The examples given above in each scenario demonstrate simplistic formulations, but are necessary to show the interactions which are possible with this invention. Without being limited to theory, it is possible to create waterfastness in inks with various types of underprinting and/or overprinting fluids which may contain quaternary amine complexes, cationic surfactants, multivalent cations, or even acid. However, the resultant print, because it is stratified towards the surface of the media, becomes much more susceptible to physical abrasion than non-overprinted or non-underprinted material. The addition of PVA as a component to the ink vehicle, underprinting vehicle and/or overprinting vehicle helps reduce the effects of physical abrasion by providing either a cover layer to the printed material, or by creating a stronger interaction by hydrogen bonding with the cellulose fibers of the media, reducing the effects of movement of fibers across the media. This result is enhanced even more when the PVA is allowed to crosslink with borate, and the above examples are used only to show the various methods in which these components may be applied in terms of order of application onto the media.

The following data represents the improvement that can be obtained with systems of this invention in terms of waterfastness and smearfastness. Several different types of PVAs are used and improvements with various types of polymers are observed.

**Table 4: Print Attributes - Function of PVA/borate interactions. (PVA: 3,000 MW, 78% hydrolyzed)**

| **Print Attribute** | **C-1** | **C-2** | **M-1** | **M-2** | **Y-1** | **Y-2** |
|---|---|---|---|---|---|---|
| % Chroma Boost^{§} | -1.92 | 1.98 | -1.13 | 1.43 | 1.38 | 0.00 |
| Waterfastness Improvement | 7.16 | 10.43 | 8.31 | 8.98 | 12.69 | 8.30 |
| Smearfastness Improvement (alkaline highlighter) | 8.21 | 4.36 | 9.36 | 4.68 | ¥ | ¥ |

| | | | | | | |
|---|---|---|---|---|---|---|
| ^{§}It should be noted that there is typically a loss in the chroma of 5-20% when using an underprinting fluid. ^{¥}No measurements were made since a yellow highlighter pen was used. | | | | | | |

**Table 5: Print Attributes - Function of PVA/borate interactions (PVA: 133,000 MW, 98% hydrolyzed)**

| **Print Attribute** | **C-1** | **C-2** | **M-1** | **M-2** | **Y-1** | **Y-2** |
|---|---|---|---|---|---|---|
| % Chroma Boost | 0.67 | 2.67 | -0.68 | -0.77 | 2.13 | 0.73 |
| Waterfastness Improvement | 8.22 | 11.77 | 10.04 | 9.52 | 12.24 | 7.45 |
| Smearfastness Improvement (alkaline highlighter) | 8.77 | 5.65 | 9.61 | 5.94 | ¥ | ¥ |

| | | | | | | |
|---|---|---|---|---|---|---|
| ^{¥}No measurements were made since a yellow highlighter pen was used. | | | | | | |

The amount of transfer can also be recorded as the mOD that was transferred using a standardized bar test in which the highlighter pen was dragged across 5 minutes after coming out of the printer. The amount of colorant transfer was then measured between the bars and the mOD transfer recorded. This is shown in Table 6 and Figure 1 for the two inks and two underprinting fluids that have data given in Table 4 and Table 5.

**Table 6: mOD Transfer - Alkaline Highlighter Smearfastness Test.**

| **Reactant Fluid** | **C-1** | **C-2** | **M-1** | **M-2** |
|---|---|---|---|---|
| None | 118 | 98 | 113 | 72 |
| 1 | 32 | 55 | 30 | 30 |
| 2 | 27 | 42 | 28 | 18 |

**Table 7: Formulations Used:**

| **Component** | **RF-1** | **RF-2** | **C-1** | **C-2** | **M-1** | **M-2** | **Y-1** | **Y-2** |
|---|---|---|---|---|---|---|---|---|
| 1,5-pentanediol | -- | -- | 8.0 | 8.0 | 8.0 | 8.0 | 8.0 | 8.0 |
| 2-pyrrolidinone | 10.0 | 10.0 | 7.5 | 7.5 | 7.5 | 7.5 | 7.5 | 7.5 |
| EHPD | -- | -- | 7.5 | 7.5 | 7.5 | 7.5 | 7.5 | 7.5 |
| Succinic acid | -- | -- | 7.0 | -- | 7.0 | -- | 7.0 | -- |
| H₃BO₃ | -- | -- | -- | 7.0 | -- | 7.0 | -- | 7.0 |
| Tergitol 15-S-5 | -- | -- | 1.5 | 1.5 | 1.5 | 1.5 | 1.5 | 1.5 |
| Dowfax 8390 | -- | -- | 1.0 | 1.0 | 1.0 | 1.0 | 1.0 | 1.0 |
| NH₄NO₃ | -- | -- | 0.5 | 0.5 | 0.5 | 0.5 | 0.5 | 0.5 |
| pH | 7.0 | 7.0 | 8.0 | 8.0 | 8.0 | 8.0 | 8.0 | 8.0 |
| Liponics EG-1 | 4.0 | 4.0 | -- | -- | -- | -- | -- | -- |
| Fluorad FC-170C | 2.0 | 2.0 | -- | -- | -- | -- | -- | -- |
| Tergitol 15-S-7 | 2.0 | 2.0 | -- | -- | -- | -- | -- | -- |
| Proxel GXL | 0.2 | 0.2 | -- | -- | -- | -- | -- | -- |
| PVA (MW = 133,000) | 1.0 | -- | -- | -- | -- | -- | -- | -- |
| PVA (MW = 3,000) | -- | 1.0 | -- | -- | -- | -- | -- | -- |

The values obtained in this data set are the average taken of several readings using 'fixative' agents which include the specified PVA. The underprinting/overprinting reactant fluids are made as described earlier in this invention and consist of the following: humectant.(0-40 wt %, preferably 5-30 wt %, more preferably 5-20 wt %), surfactant (0-20 wt %, preferably 0.5-10 wt %, more preferably 0.5-5 wt %); cationic surfactant of 0-20 wt %, preferably 1-10 wt %, more preferably 1-5 wt %; and/or organic acid of 0-40 wt %, preferably 1-20 wt %, more preferably 1-10 wt %; a biocide of --5 wt %, preferably 0.1-2 wt %, and more preferably 0.1-0.5 wt %; and a tracer dye that can be tracked by either IR or UV and has no absorption in the visible spectrum (0-10 wt %, preferably 0-5 wt %, more preferably 0.01-1 wt %).

## Claims

1. An inkset for inkjet printing comprising at least two or more fluids wherein
a) at least one of said fluids (Fluid A) comprises a colorant selected from anionic dyes and pigments, and water;
b) at least one of said fluids (Fluid B) is a clear fluid and comprises a polyvinyl alcohol and polyethyleneimine;
wherein either Fluid A comprises a borate compound or a separate fluid is provided comprising a borate compound.

2. An inkset according to Claim 1 comprising at least five fluids.

3. An inkset according to Claim 2 wherein four of said five fluids comprise colorants selected from the group consisting of magenta, yellow, cyan, and black, wherein at least one of said colorant-containing fluids comprise said borate compound.

4. An inkset according to Claim 2 additionally comprising a 6^{th} fluid.

5. An inkset according to Claim 4 wherein said 6^{th} fluid comprises polyvinyl alcohol and polyethyleneimine.

6. An inkset according to Claim 4 wherein said 6^{th} fluid comprises a borate compound.

7. A method of inkjet printing comprising the steps of:
a) printing a first clear fluid comprising a polyvinyl alcohol and polyethyleneimine (Fluid B) onto a substrate; and
b) printing a second fluid comprising a colorant selected from anionic dyes and pigments, and water (Fluid A) such that it contacts Fluid B;
wherein Fluid A comprises a borate compound or a third fluid is printed which comprises a borate compound; and the step
c) of subjecting said substrate to heat.

8. A method according to Claim 7 wherein said heat is applied by a fuser.

9. A method according to Claim 7 wherein Fluid A comprises a borate-containing compound.

10. A method according to Claim 7 wherein said Fluid A is printed over Fluid B.

11. A method according to Claim 7 wherein said Fluid A is printed under Fluid B.

12. A method according to Claim 7 wherein said Fluid B is printed both over and under Fluid A.

13. A method according the Claim 7 comprising an additional step of printing a third fluid, Fluid C.

14. A method according the Claim 12 wherein Fluid C is clear.

15. A method according to Claim 14 wherein said Fluid C is printed over Fluid A and Fluid B.

16. A method according to Claim 14 wherein said Fluid C is printed under Fluid A and Fluid B.

## Patentansprüche

1. Ein Tintensatz zum Tintenstrahldrucken, der zumindest zwei oder mehr Fluide aufweist, wobei
a) zumindest eines der Fluide (Fluid A) ein Farbmittel, das aus anionischen Farbstoffen und Pigmenten ausgewählt ist, und Wasser aufweist;
b) zumindest eines der Fluide (Fluid B) ein klares Fluid ist und einen Polyvinylalkohol und Polyethylenimin aufweist;
wobei entweder Fluid A eine Boratverbindung aufweist oder ein getrenntes Fluid vorgesehen ist, das eine Boratverbindung aufweist.

2. Ein Tintensatz gemäß Anspruch 1, der zumindest fünf Fluide aufweist.

3. Ein Tintensatz gemäß Anspruch 2, bei dem vier der fünf Fluide Farbmittel aufweisen, die aus der Gruppe ausgewählt sind, die Magenta, Gelb, Zyan und Schwarz umfasst, wobei zumindest eines der Farbmittel enthaltenden Fluide die Boratverbindung aufweist.

4. Ein Tintensatz gemäß Anspruch 2, der zusätzlich ein 6. Fluid aufweist.

5. Ein Tintensatz gemäß Anspruch 4, bei dem das 6. Fluid Polyvinylalkohol und Polyethylenimin aufweist.

6. Ein Tintensatz gemäß Anspruch 4, bei dem das 6. Fluid eine Boratverbindung aufweist.

7. Ein Verfahren zum Tintenstrahldrucken, das folgende Schritte aufweist:
a) Drucken eines ersten klaren Fluids, das einen Polyvinylalkohol und Polyethylenimin aufweist (Fluid B), auf ein Substrat; und
b) Drucken eines zweiten Fluids, das ein Farbmittel, das aus anionischen Farbstoffen und Pigmenten ausgewählt ist, und Wasser aufweist (Fluid A), derart, dass dasselbe Fluid B berührt;
wobei Fluid A eine Boratverbindung aufweist oder ein drittes Fluid gedruckt wird, das eine Boratverbindung aufweist; und den Schritt eines
c) Aussetzens des Substrats gegenüber Wärme.

8. Ein Verfahren gemäß Anspruch 7, bei dem die Wärme durch eine Schmelzeinrichtung angelegt wird.

9. Ein Verfahren gemäß Anspruch 7, bei dem das Fluid A eine Borat enthaltende Verbindung aufweist.

10. Ein Verfahren gemäß Anspruch 7, bei dem das Fluid A über dem Fluid B gedruckt wird.

11. Ein Verfahren gemäß Anspruch 7, bei dem das Fluid A unter dem Fluid B gedruckt wird.

12. Ein Verfahren gemäß Anspruch 7, bei dem das Fluid B sowohl über als auch unter dem Fluid A gedruckt wird.

13. Ein Verfahren gemäß Anspruch 7, das einen zusätzlichen Schritt eines Druckens eines dritten Fluids, Fluid C, aufweist.

14. Ein Verfahren gemäß Anspruch 12, bei dem Fluid C klar ist.

15. Ein Verfahren gemäß Anspruch 14, bei dem das Fluid C über Fluid A und Fluid B gedruckt wird.

16. Ein Verfahren gemäß Anspruch 14, bei dem das Fluid C unter Fluid A und Fluid B gedruckt wird.

## Revendications

1. Ensemble d'encre pour l'impression jet d'encre comprenant au moins deux fluides ou plus, dans lequel
a) au moins un desdits fluides (fluide A) comprend une matière colorante, sélectionnée parmi les colorants anioniques et les pigments, et de l'eau ;
b) au moins un desdits fluides (fluide B) est un fluide transparent et comprend un alcool polyvinylique et de la polyéthylène imine ;
où soit le fluide A comprend un composé de borate soit on fournit un fluide séparé qui comprend un composé de borate.

2. Ensemble d'encre selon la revendication 1, comprenant au moins cinq fluides.

3. Ensemble d'encre selon la revendication 1, où quatre desdits cinq fluides comprennent des matières colorantes sélectionnées dans le groupe constitué du magenta, du jaune, du cyan, et du noir, où au moins un desdits fluides contenant la matière colorante comprend ledit composé de borate.

4. Ensemble d'encre selon la revendication 2, comprenant en plus un 6^{ème} fluide.

5. Ensemble d'encre selon la revendication 4, où ledit 6^{ème} fluide comprend un alcool polyvinylique et la polyéthylène imine.

6. Ensemble d'encre selon la revendication 4, où ledit 6^{ème} fluide comprend un composé de borate.

7. Procédé d'impression jet d'encre comprenant les étapes consistant à :
a) imprimer un premier fluide transparent comprenant un alcool polyvinylique et une polyéthylène imine (fluide B) sur un substrat ; et
b) imprimer un deuxième fluide comprenant une matière colorante, choisie parmi les colorants anioniques et les pigments, et de l'eau (fluide A) de sorte qu'il entre en contact avec le fluide B ;
où le fluide A comprend un composé de borate ou on imprime un troisième fluide qui comprend un composé de borate ; et l'étape consistant à :
c) soumettre ledit substrat à la chaleur.

8. Procédé selon la revendication 7, où ladite chaleur est appliquée par un fondeur.

9. Procédé selon la revendication 7, où le fluide A comprend un composé contenant du borate.

10. Procédé selon la revendication 7, où ledit fluide A est imprimé sur le fluide B.

11. Procédé selon la revendication 7, où ledit fluide A est imprimé sous le fluide B.

12. Procédé selon la revendication 7, où ledit fluide B est imprimé à la fois sur et sous le fluide A.

13. Procédé selon la revendication 7, comprenant une étape supplémentaire consistant à imprimer un troisième fluide, le fluide C.

14. Procédé selon la revendication 12, où le fluide C est transparent.

15. Procédé selon la revendication 14, où ledit fluide C est imprimé sur le fluide A et le fluide B.

16. Procédé selon la revendication 14, où ledit fluide C est imprimé sous le fluide A et le fluide B.
